# EUROPÄISCHE PATENTSCHRIFT

(11) **EP 0 957 008 B1**
(45) Veröffentlichungstag und Bekanntmachung des Hinweises auf die Patenterteilung: **29.08.2001**
(21) Anmeldenummer: 99116760.2
(22) Anmeldetag: 18.03.1997
(51) Int. Cl.: B60R 21/16, B60R 21/20

(54) **Seitenaufprall-Schutzeinrichtung**
Side Impact Protection Apparatus
Dispositif de protection à l'égard d' impacts latéraux

(30) Priorität: 29.03.1996 DE 29605897 U
(43) Veröffentlichungstag der Anmeldung: 17.11.1999
(62) Teilanmeldung aus: 97104571.1
(73) Patentinhaber: TRW Occupant Restraint Systems GmbH & Co. KG, 73551 Alfdorf (DE)
(72) Erfinder: Acker, Dominique, 73553 Alfdorf (DE)
(74) Vertreter: Kitzhofer, Thomas, Dipl.-Ing.

(56) Entgegenhaltungen:
- WO-A-94/19215
- WO-A-96/09193
- FR-A- 2 345 316
- GB-A- 2 278 812
- US-A- 2 806 737
- PATENT ABSTRACTS OF JAPAN vol. 095, no. 008, 29. September 1995 (1995-09-29) & JP 07 117605 A (HONDA MOTOR CO LTD), 9. Mai 1995 (1995-05-09)

## Beschreibung

Die Erfindung betrifft eine Seitenaufprall-Schutzeinrichtung nach dem Oberbegriff des Anspruchs 1.

Ein Gassack als Teil einer Seitenaufprall-Schutzeinrichtung ist bereits aus der WO 94/19215 bekannt. Dieser Kopf-Gassack ist schlauchförmig ausgebildet und mit seinen seitlichen Enden an der A- und an der B-Säule befestigt. Im zusammengefalteten Zustand erstreckt sich der Gassack unter einer Verkleidung längs der A-Säule über den Dachrahmen bis zur B-Säule, so daß er im wesentlichen bogenförmig im Fahrzeug eingebaut ist. Der Gassack besitzt ein spezielles Gewebe, das beim Aufblasen des Gassacks eine starke Längenverkürzung desselben hervorruft. Beim Entfalten öffnet der Gassack die Verkleidung und erstreckt sich nahezu linear von einem Befestigungsende zum entgegengesetzten.

Der bekannte Gassack stützt sich beim Auftreffen des Kopfes eines Fahrzeuginsassen nicht auf der Seitenscheibe ab, die bei einem Seitenaufprall ohnehin meistens zerstört wird, sondern verspannt sich zwischen seinen seitlichen Enden.

Das spezielle Gewebe macht den bekannten Gassack jedoch relativ teuer. Zudem kann mit diesem Gewebe beim Aufblasen nur eine begrenzte Verkürzung des Gassacks in Längsrichtung erreicht werden.

Eine gattungsgemäße Seitenaufprall-Schutzeinrichtung ist aus der GB-A-2 278 812 bekannt. Bei dieser Schutzeinrichtung wird ein Gassack zwischen der A-Säule und der B-Säule verspannt. Um ein schnelles und exaktes Entfalten des Gassacks zu erreichen, ist gemäß einer Ausführungsform eine Antriebseinheit vorgesehen, die den Gassack mit wenigstens einem Ende schnell in eine entfaltete Position ziehen soll. Gemäß einer anderen Ausführungsform wandert wenigstens ein Ende des Gassacks längs einer Führung in der A-oder B-Säule beim Entfalten in die endgültige Position. Die bekannte Schutzeinrichtung, die ein exaktes Positionieren des Gassacks neben dem Insassen erreichen will, ist sehr aufwendig.

Aus der US-A-2 806 737 ist eine Gassack-Schutzeinrichtung bekannt, bei der ein Gassack mittels eines Teleskopzylinders entfaltet wird, um möglichst schnell die Windschutzscheibe des Fahrzeugs abzudecken. Da der Gassack hauptsächlich durch den Zylinder seitlich gehalten wird, dürfte seine Stabilität nicht sonderlich groß sein. Darüber hinaus ist die Ausbildung mittels des viel Platz benötigenden Teleskopzylinders sehr teuer.

Aufgabe der Erfindung ist es deshalb, eine einfach aufgebaute und kostengünstige Seitenaufprall-Schutzeinrichtung zu schaffen.

Vorzugsweise hat der Gassack der erfindungsgemäßen Schutzeinrichtung mindestens ein ihn in aufgeblasenem Zustand im wesentlichen quer zur Längsrichtung einschnürendes Element. Durch das einschnürende Element wird die Außenhaut des Gassacks im aufgeblasenen Zustand mehr oder weniger stark gewölbt, so daß die Gesamtlänge des zuvor bogenförmig verlegten Gassacks abnimmt und dieser geradlinig zwischen den Befestigungsstellen verspannt wird, insbesondere bei Verwendung von mehreren einschnürenden Elementen.

Das einschnürende Element kann z.B. ein separates Gewebeteil sein, das am Gassack befestigt ist, oder ein besonders gewobener Wandungsabschnitt.

Gemäß einer bevorzugten Ausführungsform ist der Gassack schlauchartig ausgebildet, wobei es hierbei besonders vorteilhaft ist, wenn das einschnürende Element den Gassack ringförmig umgibt. Da das einschnürende Element den Strömungsquerschnitt im Inneren des Gassacks nicht so weit einengen sollte, daß dadurch die Aufblaszeit eines Gassacks stark erhöht wird, verringert das einschnürende Element den Durchmesser des schlauchartigen Gassacks vorzugsweise auf etwa ein Drittel.

Es ist darüber hinaus auch möglich, ein Gassackgewebe zu verwenden, dessen Webrichtung unter 45° zur Längserstreckung des Gassacks verläuft. Ein derartiges Gassackgewebe führt zu einer Verkürzung des Gassacks in Längsrichtung beim Aufblasen. Durch die Kombination eines so ausgebildeten Gassackgewebes mit einschnürenden Elementen lassen sich besonders starke Verkürzungen des Gassacks erreichen.

Der Gassack ist an seinen entgegengesetzten seitlichen Enden am Dachrahmen und an der A-Säule eines Fahrzeugs befestigt ist und in zusammengefaltetem Zustand unter einer Abdeckung längs des Dachrahmens und der A-Säule verläuft.

Weitere Merkmale und Vorteile der Erfindung ergeben sich aus der folgenden Beschreibung und aus den Zeichnungen, auf die Bezug genommen wird. In den Zeichnungen zeigen:
- Fig. 1 eine schematische Seitenansicht einer ersten Ausführungsform der erfindungsgemäßen mit einem Seitenaufprall-Schutzeinrichtung Gassack in aufgeblasenem Zustand;
- Fig. 2 einen Schnitt längs der Linie A-A nach Fig. 1 durch einen Dachrahmen mit dem zusammengefalteten Gassack; und
- Fig. 3 eine zweite Ausführungsform der erfindungsgemäßen Seitenaufprall-Schutzeinrichtung mit einem Gassack, der kissenförmig ausgebildet ist.

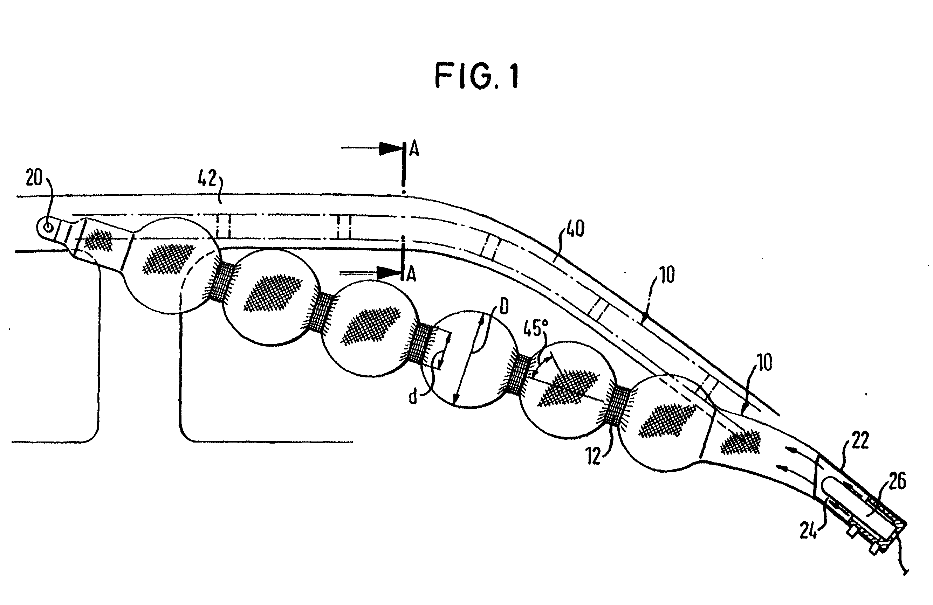

In Fig. 1 ist eine Seitenaufprall-Schutzeinrichtung mit einem Gasgenerator 26 und einem schlauchartigen Gassack 10 gezeigt. Der Gassack 10 ist mit seinen seitlichen Enden einerseits am unteren Ende der A-Säule 40 und andererseits am Dachrahmen 42 im Bereich der B-Säule eines Fahrzeugs befestigt. Entsprechende Befestigungsstellen sind mit 22 bzw. 20 bezeichnet. An der A-Säule 40 ist auch der Gasgenerator 26 befestigt, der durch eine Gaseintrittsöffnung 24 im Gassack 10 in dessen Inneres ragt.

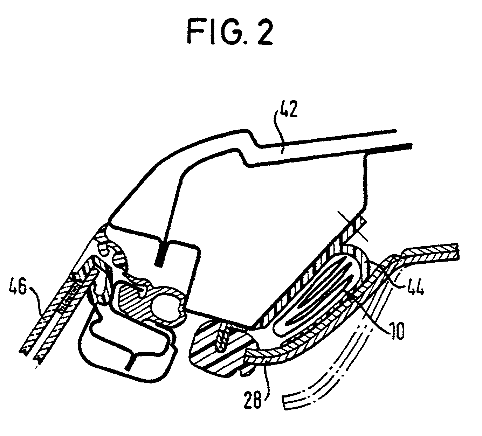

Im nicht aufgeblasenen Zustand ist der Gassack 10 unter einer Verkleidung 28 versteckt, wie Fig. 2 zu entnehmen ist. Der Gassack erstreckt sich dabei von der Befestigungsstelle 22 längs der A-Säule 40 und des Dachrahmens 42, wie in Fig. 1 mit strichpunktierten Linien gezeigt, bis hinter die B-Säule zur Befestigungsstelle 20.

Die Lagefixierung des zusammengefalteten Gassacks 10 hinter der Verkleidung 28 erfolgt über eine Kunststoffhülse 44, die ein offenes Längsende hat, welches zu einer Seitenscheibe 46 weist. Der Gassack 10 weist in regelmäßigen Abständen mehrere Einschnürungen auf, die durch Elemente 12 hervorgerufen werden, die den Gassack 10 ringförmig umgeben. Die Elemente 12 bestehen aus einem möglichst geringfügig dehnbaren Gewebeband, welches an der Wandung des Gassacks 10 befestigt ist. Darüber hinaus können die Elemente 12 auch aus Kunststoff sein oder in die Gassackwandung eingewoben sein. Ferner ist es möglich, daß ein Wandungsabschnitt 10 im Bereich der Elemente 12 besonders gewoben ist, so daß er in aufgeblasenem Zustand in diesem Bereich nicht den gesamten Gassackdurchmesser D, sondern einen verringerten Durchmesser d einnehmen kann, der etwa ein Drittel so groß ist wie der maximale Durchmesser D im nicht eingeschnürten Bereich.

Die Webrichtung der aus einem textilen Gewebe bestehenden Wandung verläuft unter 45° zur Längsrichtung des Gassacks 10 und fördert dadurch beim Aufblasen eine Verkürzung des Gassacks 10 in Längsrichtung zusammen mit den Elementen 12.

Im Falle eines Seitenaufpralls strömt vom Gasgenerator 26 erzeugtes Gas ins Innere des Gassacks 10. Der Gassack 10 verkürzt sich in Längsrichtung, so daß er die Befestigungsstellen 20, 22 auf möglichst kurzem Weg überbrückt. Zwischen den einzelnen Elementen 12 ergeben sich, je nach Abstand der Elemente 12, kugel- oder zylinderförmige Abschnitte.

Die Elemente 12 müssen nicht in regelmäßigen Abständen angeordnet sein, sondern sollen auf die Befestigungsstellen 20, 22 und die Gasgeneratorbefestigung sowie auf die Sitzposition im Verhältnis zur Gassacklage abgestimmt werden. Es können auch unterschiedliche Elemente 12 verwendet werden, die den Gassack 10 an unterschiedlichen Stellen verschieden stark einschnüren. Im Bereich des Kopfes eines Fahrzeuginsassen ist dabei eine weniger starke Einschnürung vorteilhaft, während z.B. zu den Befestigungsstellen 20, 22 hin stärkere Einschnürungen vorgesehen sein können. Der in Fig. 1 gezeigte Gassack 10 benötigt die Seitenscheibe nicht als Abstützung, da er in Längsrichtung zwischen den Befestigungsstellen 20 und 22 verspannt ist.

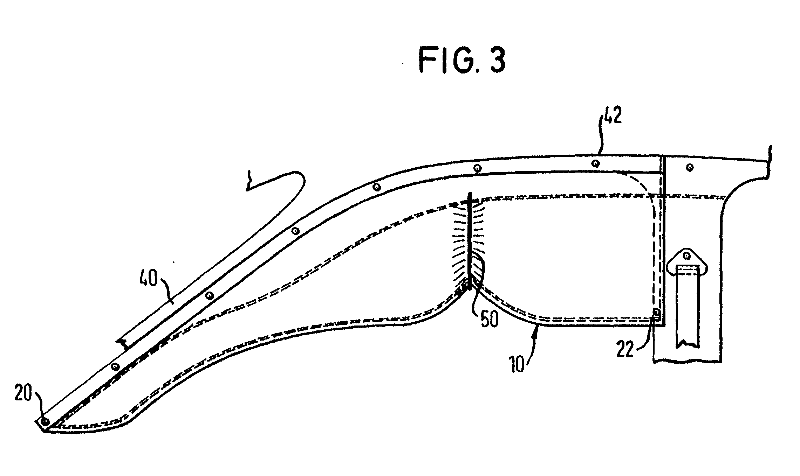

In der in Fig. 3 gezeigten Ausführungsform ist der Gassack 10 nicht schlauchartig, sondern kissenförmig ausgeführt. Er erstreckt sich in aufgeblasenem Zustand vom unteren Ende der A-Säule 40 bis zur B-Säule und ist in nicht aufgeblasenem Zustand, entsprechend Fig. 2, unter einer Abdeckung 28 versteckt. Damit ist er ebenfalls bogenförmig im Fahrzeug eingebaut. Im Gegensatz zu der in Fig. 1 gezeigten Ausführungsform sind jedoch mehr als zwei Befestigungsstellen 20, 22 vorgesehen. Beim Entfalten des Gassacks 10 verkürzt sich dieser hauptsächlich im Bereich von dessen unterem Rand so stark aufgrund einer in die Gassackwandung eingewobenen Schnur als einschnürendes Element 50, daß der Gassack 10 die Abdeckung 28 aus ihrer Befestigung herausreißt und die äußersten Befestigungsstellen 20, 22 auf einem kürzeren Weg überbrückt. Ein weiterer Unterschied zwischen der in den Fig. 1 und 2 und der in Fig. 3 gezeigten Ausführungsform besteht darin, daß das einschnürende Element 50 den kissenförmigen Gassack 10 gemäß Fig. 3 nicht ringförmig umgibt, *so*ndern nur dessen unteren Randbereich einschnürt.

Beiden Ausführungsformen ist gemeinsam, daß sich die einschnürenden Elemente 12, 50 im wesentlichen quer zur Längsrichtung des Gassacks 10 erstrecken.

Alternativ können die Elemente 12, 50 auch als am Dachrahmen 42 befestigte Bänder oder Schnüre ausgebildet sein, die den unteren Randbereich des Gassacks 10 einschnüren. Diese Ausführungsform erfordert jedoch einen größeren Montageaufwand.

## Patentansprüche

1. Seitenaufprall-Schutzeinrichtung für Fahrzeuginsassen,
mit einem Gassack (10), der im eingebauten und entfalteten Zustand einen Kontakt des Kopfes des Insassen mit der Seitenscheibe (46) des Fahrzeugs verhindert,
mit einem Gehäuse, das am Dachrahmen (42) befestigt ist und in dem der Gassack (10) in gefaltetem Zustand untergebracht ist, **dadurch gekennzeichnet**, daß das Gehäuse eine Kunststoffhülse (44) mit einem offenen Längsende ist, welches zu der dem Insassen zugeordneten Seitenscheibe (46) weist, und daß der Gassack (10) in zusammengefaltetem Zustand zwischen lagefesten Befestigungsstellen (20, 22) bogenförmig im Fahrzeug eingebaut ist und beim Aufblasen diese Befestigungsstellen (20, 22) auf kürzerem Weg überbrückt.

2. Seitenaufprall-Schutzeinrichtung nach Anspruch 1, **dadurch gekennzeichnet**, daß der Gassack (10) in gefaltetem Zustand bogenförmig im Fahrzeug längs der A-Säule (40) und des Dachrahmens (42) unter einer Verkleidung (28) montiert ist.

3. Seitenaufprall-Schutzeinrichtung nach Anspruch 1 oder 2, **dadurch gekennzeichnet**, daß die Kunststoffhülse (44) zwei im wesentlichen parallele, schräg auf die Seitenscheibe (46) gerichtete Schenkel hat.

4. Seitenaufprall-Schutzeinrichtung nach einem der vorhergehenden Ansprüche, **dadurch gekennzeichnet**, daß die Kunststoffhülse (44) in gefaltetem Zustand des Gassacks (10) an der Verkleidung (28) anliegt.

5. Seitenaufprall-Schutzeinrichtung nach einem der vorhergehenden Ansprüche, **dadurch gekennzeichnet**, daß die Verkleidung (28) an ihrem freien Rand bei gefaltetem Gassack (10) in einem an den Dachrahmen (40) angrenzenden Teil aufgenommen ist und beim Entfalten des Gassacks (10) nach unten schwenkt.

6. Seitenaufprall-Schutzeinrichtung nach einem der vorhergehenden Ansprüche, **dadurch gekennzeichnet**, daß der Gassack (10) in gefaltetem Zustand zwischen Befestigungsstellen (20, 22) an seinen entgegengesetzten Längsenden bogenformig im Fahrzeug eingebaut ist und sich beim Aufblasen in Längsrichtung verkürzt und so die Befestigungsstellen (20, 22) auf kürzerem Weg überbrückt.

7. Seitenaufprall-Schutzeinrichtung nach einem der vorhergehenden Ansprüche, **dadurch gekennzeichnet**, daß der Gassack (10) in aufgeblasenem Zustand eine kissenförmige Gestalt hat und mit seinem vorderen Längsende an der A-Säule (40) befestigt ist und sich mit seinem hinteren Längsende bis hinter die B-Säule erstreckt.

8. Seitenaufprall-Schutzeinrichtung nach einem der vorhergehenden Ansprüche, **dadurch gekennzeichnet**, daß der Gassack (10) ein einschnürendes Element (12) aufweist, das in aufgeblasenem Zustand den Gassack (10) quer zu seiner Längsrichtung einschnürt.

9. Seitenaufprall-Schutzeinrichtung nach einem der vorhergehenden Ansprüche, gekennzeichnet durch einen Gasgenerator (26), der parallel zur Kunststoffhülse (44) angeordnet ist.

10. Seitenaufprall-Schutzeinrichtung nach einem der vorhergehenden Ansprüche, **dadurch gekennzeichnet**, daß der Gasgenerator (26) an einem Längsende des Gassacks (10) angeordnet ist.

11. Seitenaufprall-Schutzeinrichtung nach Anspruch 10, **dadurch gekennzeichnet**, daß der Gasgenerator (26) an der A-Säule des Fahrzeugs befestigt ist.

## Claims

1. A side impact protection device for vehicle occupants,
comprising a gas bag (10) which in the installed and inflated state prevents the head of the occupant from coming into contact with the side window (46) of the vehicle,
comprising a housing which is secured to the roof frame (42) and in which the gas bag (10) is accommodated in the folded state, **characterized in that** the housing is a plastic sleeve (44) with an open longitudinal end pointing towards the side window (46) associated with the occupant, and that the gas bag (10) in the folded state is mounted between stationary securing sites (20, 22) so as to be bow-shaped in the vehicle and on inflation bridges these securing sites (20, 22) by a shorter route.

2. The side impact protection device according to claim 1, **characterized in that** in the folded state the gas bag (10) is mounted bow-shaped in the vehicle along the A-column (40) and along the roof frame (42) and behind a lining (28).

3. The side impact protection device according to claim 1 or 2, **characterized in that** the plastic sleeve (44) has two substantially parallel legs which are orientated toward the side window (46) at an angle.

4. The side impact protection device according to any of the preceding claims, **characterized in that** the plastic sleeve (44) rests against the lining (28) in the folded state of the gas bag (10).

5. The side impact protection device according to any of the preceding claims,
**characterized in that** the lining (28), with the gas bag (10) being folded, is received at its free edge in a part adjacent to the roof frame (40) and on inflation of the gas bag (10) pivots downwards.

6. The side impact protection device according to any of the preceding claims, **characterized in that** the gas bag (10) in the folded state is mounted between securing sites (20, 22) at its opposite longitudinal ends so as to be bow-shaped in the vehicle and on inflation shortens in the longitudinal direction and in this way bridges the securing sites (20, 22) by a shorter route.

7. The side impact protection device according to any of the preceding claims, **characterized in that** the gas bag (10) in the inflated state has the shape of a cushion and is secured to the A-column (40) by its front longitudinal end and extends with its rear longitudinal end to behind the B-column.

8. The side impact protection device according to any of the preceding claims, **characterized in that** the gas bag (10) comprises a constricting element (12) which in the inflated state constricts the gas bag (10) transversely to its longitudinal direction.

9. The side impact protection device according to any of the preceding claims, characterized by a gas generator (26) arranged so as to be parallel to the plastic sleeve (44).

10. The side impact protection device according to any of the preceding claims, **characterized in that** the gas generator (26) is arranged on a longitudinal end of the gas bag (10).

11. The side impact protection device according to claim 10, **characterized in that** the gas generator (26) is secured to the A-column of the vehicle.

## Revendications

1. Dispositif de protection contre les chocs latéraux pour les passagers d'un véhicule,
comportant un coussin à gaz (10) qui, à l'état monté et déplié empêche que la tête du passager vienne en contact avec la vitre latérale (46) du véhicule,
comportant un boîtier qui est fixé au cadre du toit (42) et dans lequel est logé le coussin à gaz (10) à l'état plié, **caractérisé en ce que** le boîtier est un manchon en matière plastique (44) avec une extrémité longitudinale ouverte qui est orientée en direction de la vitre latérale (46) associée au passager, et en ce que le coussin à gaz (10) à l'état replié est monté en forme arquée dans le véhicule entre des points de fixation (20, 22) à position fixe et qui, lorsqu'il est gonflé, surmonte ces points de fixation (20, 22) sur le trajet le plus court.

2. Dispositif de protection contre les chocs latéraux selon la revendication 1, **caractérisé en ce que** le coussin à gaz (10) est monté dans le véhicule sous un revêtement (28), à l'état plié en forme arquée le long de la colonne A (40) et du cadre de toit (42).

3. Dispositif de protection contre les chocs latéraux selon la revendication 1 ou 2, **caractérisé en ce que** le manchon en matière plastique (44) a deux branches sensiblement parallèles, dirigées en oblique sur la vitre latérale (46).

4. Dispositif de protection contre les chocs latéraux selon l'une quelconque des revendications précédentes, **caractérisé en ce que** le manchon en matière plastique (44) repose sur le revêtement (28) lorsque le coussin à gaz est à l'état plié.

5. Dispositif de protection contre les chocs latéraux selon l'une quelconque des revendications précédentes, **caractérisé en ce que** lorsque le coussin à gaz (10) est plié, le revêtement (28) est reçu, sur son bord libre, dans une partie adjacente au cadre de toit (40) et en ce qu'il pivote vers le bas lorsque le coussin à gaz (10) se déploie.

6. Dispositif de protection contre les chocs latéraux selon l'une quelconque des revendications précédentes, **caractérisé en ce qu**'à l'état plié, le coussin à gaz (10) est monté en forme arquée à ses extrémités longitudinales opposées dans le véhicule, entre des points de fixation (20, 22), et en ce qu'il se raccourcit en direction longitudinale lorsqu'il est gonflé et surmonte ainsi les points de fixation (20, 22) sur le trajet le plus court.

7. Dispositif de protection contre les chocs latéraux selon l'une quelconque des revendications précédentes, **caractérisé en ce qu**'à l'état gonflé, le coussin à gaz (10) a la forme d'un coussin et est fixé par son extrémité longitudinale antérieure à la colonne A et s'étend par son extrémité postérieure jusque derrière la colonne B.

8. Dispositif de protection contre les chocs latéraux selon l'une quelconque des revendications précédentes, **caractérisé en ce que** le coussin à gaz (10) présente un élément d'étranglement (12) qui étrangle le coussin à gaz (10) perpendiculairement à sa direction transversale, à l'état gonflé.

9. Dispositif de protection contre les chocs latéraux selon l'une quelconque des revendications précédentes, caractérisé par un générateur de gaz (26) qui est agencé parallèlement au manchon en matière plastique (44).

10. Dispositif de protection contre les chocs latéraux selon l'une quelconque des revendications précédentes, **caractérisé en ce que** le générateur de gaz (26) est agencé sur une extrémité longitudinale du coussin à gaz (10).

11. Dispositif de protection contre les chocs latéraux selon la revendication 10, **caractérisé en ce que** le générateur de gaz (26) est fixé à la colonne A du véhicule.
